(19) Europäisches Patentamt
European Patent Office
Office européen des brevets

(11) **EP 3 789 633 B1**

(12) **EUROPÄISCHE PATENTSCHRIFT**

(45) Veröffentlichungstag und Bekanntmachung des Hinweises auf die Patenterteilung:
**11.10.2023   Patentblatt 2023/41**

(21) Anmeldenummer: **20192567.4**

(22) Anmeldetag: **25.08.2020**

(51) Internationale Patentklassifikation (IPC):
*F16H 47/02* (2006.01)      *F16H 61/47* (2010.01)
*F16H 61/444* (2010.01)      *B60K 17/00* (2006.01)

(52) Gemeinsame Patentklassifikation (CPC):
**F16H 47/02; B60K 17/10; F16H 61/444;**
**F16H 61/47;** B60K 17/02; B60K 17/08;
F16H 2047/025; F16H 2061/0015

(54) **SCHALTSTRATEGIE FÜR FAHRANTRIEB MIT SUMMIERUNGSGETRIEBE**

SHIFTING STRATEGY FOR TRACTION DRIVE WITH COMPOUNDING GEARBOX

STRATÉGIE DE COMMUTATION POUR SYSTÈME D'ENTRAÎNEMENT POURVU DE BOÎTE DE SOMMATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.09.2019   DE 102019213473**

(43) Veröffentlichungstag der Anmeldung:
**10.03.2021   Patentblatt 2021/10**

(73) Patentinhaber: **Robert Bosch GmbH**
**70442 Stuttgart (DE)**

(72) Erfinder:
• **Fassbender, David**
  **53579 Erpel (DE)**
• **Xiang, Yusheng**
  **89077 Ulm (DE)**

(56) Entgegenhaltungen:
EP-A1- 2 187 027         DE-A1-102015 223 384
DE-T5-112006 002 950     US-A1- 2004 242 357

**Beschreibung**

Die Erfindung betrifft einen Fahrantrieb mit einem Summierungsgetriebe z.B. für eine mobile Maschine gemäß dem Oberbegriff des Patentanspruchs 1.

Fahrantriebe mit einer Hydropumpe, zwei Hydromotoren und einem Summierungsgetriebe (vereinfachend als Zwei-Motoren-Summierungsgetriebe ZMSG bezeichnet) kommen insbesondere in mobilen Maschinen zur Leistungsübertragung z.B. zwischen einem Verbrennungsmotor und Rädern zum Einsatz.

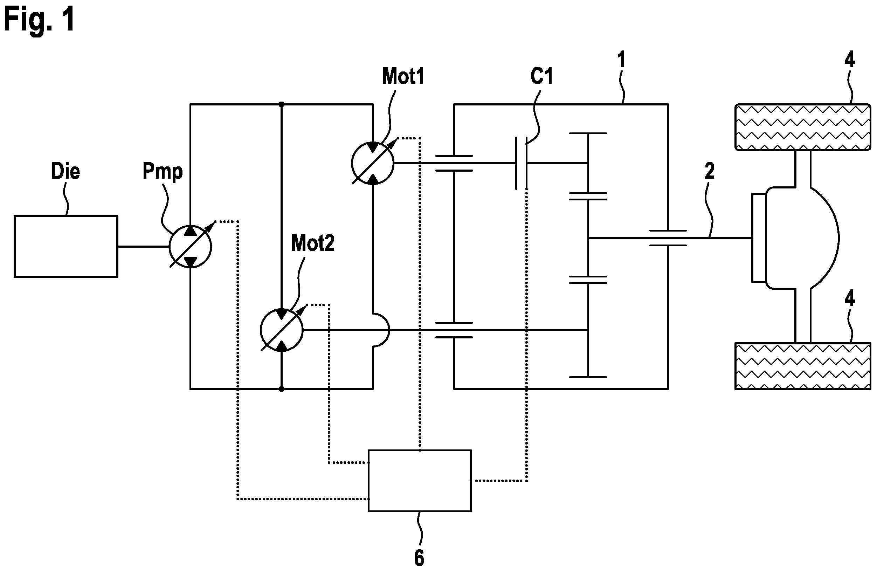

In Figur 1 ist der Aufbau eines Fahrantriebs mit einer verstellbaren Hydropumpe dargestellt, der hydraulisch verbunden mit zwei parallel geschalteten ebenfalls verstellbaren Hydromotoren ist. Die Hydromotoren sind beide über ein Summierungsgetriebe mit der Abtriebswelle des Summierungsgetriebes bzw. des Fahrantriebes verbunden und treiben diese an. In einem ersten Betriebszustand, bzw. Fahrbereich sind beide Hydromotoren aktiv und somit auch verlustbehaftet. Der erste (so genannte temporäre) Hydromotor kann über eine erste Kupplung vom Summierungsgetriebe und damit von der Abtriebswelle getrennt werden. Dann befindet sich der Fahrantrieb im zweiten Betriebszustand bzw. Fahrbereich. Dabei ist nur der zweite (so genannte permanente) Hydromotor aktiv und der erste Hydromotor dreht sich nach dem Abkuppeln nicht mehr, sorgt demnach auch nicht mehr für mechanische Verlustleistung.

Eingesetzt werden derartige Fahrantriebe typischerweise auf mobilen Maschinen wie z.B. auf Baufahrzeugen mittleren Gewichts mit geringem Fahranteil auf öffentlichen Straßen wie Radladern oder Telehändlern, um die Maximalgeschwindigkeit gegenüber der Ausführung mit einem einfachen hydrostatischen Getriebe zu erhöhen.

Bei niedrigen Geschwindigkeiten und hohen gewünschten Fahrkräften wird im ersten Fahrbereich gefahren. Dabei steht mit beiden Hydromotoren gemeinsam ein großes Schluckvolumen zur Verfügung, sodass auch mit wenig Druck hohe Kräfte realisierbar sind.

Bei hohen Geschwindigkeiten wird im zweiten Fahrbereich gefahren. Dann sorgt das niedrigere verfügbare Schluckvolumen dafür, dass der zweite bzw. permanente Hydromotor nach wie vor mit hohen und damit effizienteren Schwenkwinkeln betrieben werden kann, ohne dass die Hydropumpe an die Grenzen des maximal förderbaren Volumenstroms kommt. Auf diese Weise erweitert der Fahrantrieb den Geschwindigkeitsbereich, in dem er (effektiv) betrieben werden kann.

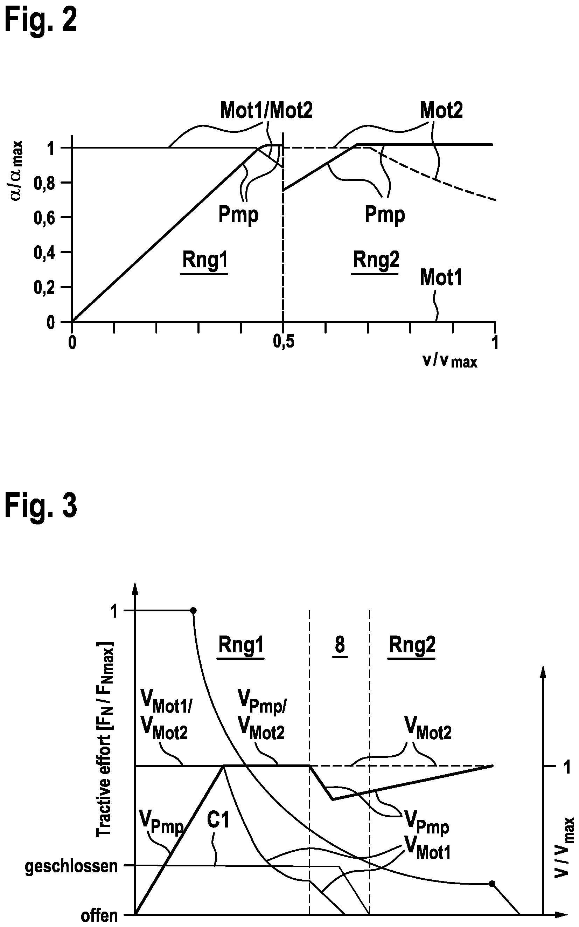

Aus dem Stand der Technik ist es bekannt, den Fahrer selbst den Wechsel manuell über ein Bedienelement vornehmen zu lassen oder einen automatischen Wechsel vorzunehmen. Dabei dient meist ein Vergleich zwischen aktueller Fahrgeschwindigkeit und einer Grenzgeschwindigkeit der mobilen Maschine als Entscheidungskriterium. Eine derartige geschwindigkeitsabhängige Steuerung der Fahrbereiche kann aus Figur 2 herausgelesen werden. Dabei sind die Hydropumpe und die beiden Hydromotoren variabel ausgeführt, und es ist gezeigt, wie sich deren Schwenkwinkel in den beiden Fahrbereichen verhalten können. Das Dokument EP2187027A1 offenbart einen Fahrantrieb nach dem Oberbegriff des Anspruchs 1.

Außerdem sind Lösungen bekannt, die zusätzlich eine Abhängigkeit von einem Fahrpedal implementieren. Bei starker Betätigung des Fahrpedals wird dann erst bei höheren Fahrgeschwindigkeiten in den zweiten Fahrbereich geschaltet.

Außerdem ist eine Strategie bekannt, bei welcher über die Fahrgeschwindigkeit und die Fahrpedalstellung hinausgehend auch die Drehzahl des die Hydropumpe antreibenden Verbrennungsmotors bei der Wahl des Fahrbereichs berücksichtigt wird.

Die Fragestellung, wann vom ersten in den zweiten Fahrbereich und wann wieder zurückgeschaltet werden sollte, ist Ansatzpunkt dieser Erfindung.

Aufgabe der Erfindung ist es, als Teil einer momentenbasierten Steuerung eines Fahrantriebs mit zwei-Hydromotoren und einem Summierungsgetriebe den optimalen Fahrbereich auszuwählen, damit anschließend in diesem verblieben werden oder in diesen geschaltet werden kann. Die Aufgabe wird gelöst durch einen Fahrantrieb mit den Merkmalen des Patentanspruchs 1. Weitere vorteilhafte Ausgestaltungen der Erfindung sind in den abhängigen Patentansprüchen beschrieben.

Der beanspruchte Fahrantrieb hat eine Hydropumpe, von der ein erster Hydromotor und ein dazu parallel geschalteter zweiter Hydromotor versorgbar sind. Der erste Hydromotor ist über eine erste Kupplung an eine Abtriebswelle eines Summierungsgetriebes koppelbar, während der zweite Hydromotor an die Abtriebswelle koppelbar oder dauerhaft gekoppelt ist. Ein Steuergerät ist zur Durchführung einer Steuerung des Moments der Abtriebswelle ausgelegt. Der Fahrantrieb ist über das Steuergerät mittels der ersten Kupplung zwischen einem ersten und einem zweiten Fahrbereich oder Betriebszustand umschaltbar. Erfindungsgemäß ist der Fahrantrieb über das Steuergerät in Abhängigkeit eines vom Steuergerät ermittelten bzw. berechneten Wirkungsgrades des Fahrantriebs zwischen dem ersten und dem zweiten Fahrbereich umschaltbar.

Unter dem optimalen Fahrbereich wird erfindungsgemäß derjenige Fahrbereich verstanden, in dem die Leistungsverluste der Hydropumpe und der beiden Hydromotoren am geringsten sind, und damit der Wirkungsgrad des Fahrantriebs am höchsten ist.

Vorteile:

- Die volumetrischen und hydraulisch-mechanischen Verluste des Fahrantriebs sind zu jedem Zeitpunkt so gering wie möglich.
- Es steht mehr Leistung eines antreibenden Motors für Arbeitsaufgaben der mobilen Maschine zur Verfügung.

Wenn der antreibende Motor ein Verbrennungsmotor ist, wird weiterhin Kraftstoff eingespart und es werden Emissionen reduziert.

Laut der Erfindung, werden bei der Ermittlung des Wirkungsgrades mathematische Beschreibungen für Volumenstrom- und Momentenverluste an der Hydropumpe und an den beiden Hydromotoren in Abhängigkeit von zumindest einem jeweiligen Betriebsparameter berücksichtigt. Die mathematischen Beschreibungen sind in dem Steuergerät abgelegt.

Die Ermittlung des Wirkungsgrades kann mittels eines Kennfeldes erfolgen, das in dem Steuergerät abgelegt ist.

Die Wirkungsgradoptimierung des erfindungsgemäßen Fahrantriebs ist weiter verbessert, wenn der berechnete Wirkungsgrad von einer Drehzahl der Abtriebswelle und damit von einer Fahrgeschwindigkeit einer betroffenen mobilen Maschine abhängt

Die Wirkungsgradoptimierung des erfindungsgemäßen Fahrantriebs ist weiter verbessert, wenn der berechnete Wirkungsgrad von einer Drehzahl der Hydropumpe und damit von einer Drehzahl des Verbrennungsmotors abhängt.

Wenn die Hydropumpe und/oder die beiden Hydromotoren verstellbar sind, lässt sich die Wirkungsgradoptimierung des erfindungsgemäßen Fahrantriebs weiter verbessern, wenn der berechnete Wirkungsgrad von einem jeweiligen Schwenkwinkel der Hydropumpe und/oder der beiden Hydromotoren abhängt.

Die Wirkungsgradoptimierung des erfindungsgemäßen Fahrantriebs ist weiter verbessert, wenn der berechnete Wirkungsgrad von einem Eingangssignal eines Eingangsanschlusses des Steuergerätes abhängt, an den ein Bedienelement, insbesondere ein Fahrpedal der mobilen Maschine, anschließbar oder angeschlossen ist.

Vorzugsweise hat der erfindungsgemäße Fahrantrieb einen geschlossenen hydrostatischen Kreis, wobei das Steuergerät zur Durchführung einer Drucksteuerung ausgelegt ist.

Bei einem ersten Ausführungsbeispiel des erfindungsgemäßen Fahrantriebs handelt es sich um ein so genanntes 2+1-Getriebe, bei dem der zweite Hydromotor permanent an die Abtriebswelle gekoppelt ist.

Vorzugsweise wird durch Schließen der Kupplung der erste Fahrbereich und durch Öffnen der Kupplung der zweite Fahrbereich geschaltet.

Vorzugsweise werden für die beiden Fahrbereiche permanent die jeweiligen Wirkungsgrade berechnet und die Kupplung über das Steuergerät so geschaltet, dass stets der optimale Fahrbereich geschaltet, also aktiviert ist.

Bei einem zweiten Ausführungsbeispiel des erfindungsgemäßen Fahrantriebs handelt es sich um ein so genanntes 3+2-Getriebe, bei dem auch der zweite Hydromotor über eine zweite Kupplung an die Abtriebswelle koppelbar ist. Der erste Hydromotor ist über eine dritte Kupplung alternativ zur ersten Kupplung an die Abtriebswelle koppelbar. Damit ergibt sich mindestens ein dritter Fahrbereich oder Betriebszustand. Erfindungsgemäß ist der Fahrantrieb über das Steuergerät in Abhängigkeit des berechneten Wirkungsgrades zwischen den mindestens drei Fahrbereichen umschaltbar.

Vorzugsweise wird durch Schließen der ersten und der zweiten Kupplung der erste Fahrbereich und durch Öffnen der ersten Kupplung der zweite Fahrbereich und durch Öffnen auch der zweiten Kupplung bei gleichzeitigem Schließen der dritten Kupplung der dritte Fahrbereich geschaltet.

Vorzugsweise werden für alle drei Fahrbereiche permanent die jeweiligen Wirkungsgrade berechnet und die drei Kupplungen über das Steuergerät so geschaltet, dass stets der optimale Fahrbereich geschaltet, also aktiviert ist.

Zwei Ausführungsbeispiele eines erfindungsgemäßen Fahrantriebs sind in den Figuren dargestellt.

Es zeigen

Figur 1 ein Schaltbild eines aus dem Stand der Technik per se bekannten und für die erfindungsgemäße Steuerungsstrategie genutzten Fahrantriebs gemäß einem ersten Ausführungsbeispiel,

Figur 2 ein Schaltdiagramm für den Fahrantrieb aus Figur 1 mit einem erfindungsgemäß wirkungsgradabhängigen Wechsel des Fahrbereiches, der sich bei der halben Maximalgeschwindigkeit der mobilen Maschine ergibt,

Figur 3 ein Schaltdiagramm für den Fahrantrieb aus Figur 1, bei dem erfindungsgemäß ein wirkungsgradabhängiger Wechsel zwischen den beiden Fahrbereichen erfolgt,

Figur 4 ein Blockdiagramm für den Fahrantrieb aus Figur 1, bei dem erfindungsgemäß ein wirkungsgradabhängiger Wechsel zwischen den beiden Fahrbereichen erfolgt,

Figur 5 ein Schaltbild eines für die erfindungsgemäße Steuerungsstrategie genutzten Fahrantriebs gemäß einem zweiten Ausführungsbeispiel, und

Figur 6 ein Schaltdiagramm für den Fahrantrieb aus Figur 5, bei dem erfindungsgemäß ein wirkungsgradabhängiger Wechsel zwischen den drei Fahrbereichen erfolgt.

Figur 1 zeigt ein Schaltbild eines Fahrantriebs gemäß einem ersten Ausführungsbeispiel. Dieser hat ein Steuergerät 6, in dem die erfindungsgemäße Steuerungsstrategie abgelegt ist, und von dem die erfindungsgemäß wirkungsgradabhängige Steuerung des Fahrantriebs realisierbar ist.

Der Fahrantrieb hat eine verstellbare Hydropumpe Pmp, die von einem Verbrennungsmotor Die, z.B. von einem Dieselmotor, angetrieben wird. Die Hydropumpe Pmp versorgt zwei zueinander parallel geschaltete Hydromotoren Mot1, Mot2. Der erste Hydromotor Mot1 ist über eine erste Kupplung C1 und über ein Summierungsgetriebe 1 an eine Abtriebswelle 2 des Summierungsgetriebes 1 gekoppelt. Der zweite Hydromotor Mot2 ist permanent über das Summierungsgetriebe 1 an die Abtriebswelle 2 des Summierungsgetriebes 1 gekoppelt. Die Abtriebswelle 2 treibt zwei Räder 4 einer (nicht näher gezeigten) mobilen Maschine an.

Über das Steuergerät 6 werden unter anderem die Schwenkwinkel α der Hydropumpe Pmp und der beiden Hydromotoren Mot1, Mot2 eingestellt und die Kupplung C1 betätigt.

Figur 2 zeigt ein Schaltdiagramm für den Fahrantrieb aus Figur 1, wobei sich aus dem Schaltdiagramm ein geschwindigkeitsabhängiger Wechsel zwischen der beiden Fahrbereiche gemäß dem Stand der Technik herauslesen ließe. Genauer gesagt zeigt das Schaltdiagramm aber einen wirkungsgradabhängigen Wechsel zwischen den beiden Fahrbereichen gemäß der Erfindung, der sich beim gezeigten ersten Ausführungsbeispiel bei der halben Maximalgeschwindigkeit der mobilen Maschine v ergibt.

Figur 2 zeigt weiterhin exemplarisch für den Fahrantrieb, in dem die Hydropumpe Pmp und die beide Hydromotoren Mot1, Mot2 variabel ausgeführt sind, wie sich deren Schwenkwinkel α in den beiden verschiedenen Fahrbereichen Rng1, Rng2 verhalten. Dazu sind die Schwenkwinkel α über der Geschwindigkeit der mobilen Maschine v gezeigt. Der technisch problemlos mögliche Einsatzbereich beider Fahrbereiche Rng1, Rng2 ist groß.

Grundlage für die Schaltstrategie gemäß der Erfindung ist das Vorhandensein mathematischer Beschreibungen für die Volumenstrom- und die Momentenverluste an der Hydropumpe Pmp und der beiden Hydromotoren Mot1, Mot2 in Abhängigkeit von Betriebsparametern. Betriebsparameter sind z.B. die drei Drehzahlen $n$, die drei Druckdifferenzen $\Delta p$ oder die drei Verdrängungsvolumina $V$ bzw. die drei Schwenkwinkel $\alpha$.

Für den bei diesem Ausführungsbeispiel betrachteten Radlader liegen die Beschreibungen als Gleichungen in folgender Form vor:

$$Q_{Ver} = f(n, \, \Delta p) \tag{5.1}$$

$$M_{Ver} = f(n, \, V, \, \Delta p) \tag{5.2}$$

Die Gleichungen sind mathematische Näherungen an, in Versuchen gemessene, Verläufe, jeweils für Hydropumpe Pmp und der beiden Hydromotoren Mot1, Mot2. Die gesamte Verlustleistung ergibt sich nach den folgenden Gleichungen:

$$P_{Ver, \, Verdraenger_i} = Q_{Ver} * \Delta p + M_{Ver} * n * 2\pi \tag{5.3}$$

$$P_{Ver, \, ges} = P_{Ver, \, Pmp} + P_{Ver, \, Mot1} + P_{Ver, \, Mot2} \tag{5.4}$$

Kombiniert man Gleichungen 5.1, 5.2 und 5.4 ergibt sich:

$$P_{Ver, \, ges} = f(n_{Pmp}, \, n_{Mot1}, \, n_{Mot2}, \, V_{Pmp}, \, V_{Mot1}, \, V_{Mot2}, \, \Delta p) \tag{5.5}$$

In der auf der mobilen Maschine eingesetzten momentenbasierten Steuerung errechnen das Steuergerät 6 die Verdrängungsvolumina $V$ allein aus dem aktuellen Verhältnis zwischen Hydropumpen- und Hydromotordrehzahl $n$ sowie dem Fahrbereich Rng1, Rng 2. In folgenden Gleichungen ist dies für den Fahrantrieb mit zwei variablen Hydromotoren Mot1, Mot2 aus Figur 1 zu sehen:

$$V_{Mot1} = V_{Mot1,max} * (2 - Rng) * \frac{V_{Pmp,max} * n_{Pmp}}{\left(V_{Mot1,max} * \frac{i_1}{i_2} + V_{Mot2}\right) * n_{Mot2}}$$

$$\tag{5.6}$$

$$V_{Mot2} = V_{Mot2,max} * (2 - Rng) * \frac{V_{Pmp,max} * n_{Pmp}}{(V_{Mot1,max} * \frac{i_1}{i_2} + V_{Mot2}) * n_{Mot2}} + (Rng - 1) * \frac{V_{Pmp,max} * n_{Pmp}}{n_{Mot2}}$$

$$(5.7)$$

Die Schluckvolumina V für die Hydromotoren Mot1, Mot2 werden auf den maximalen Wert begrenzt und anschließend kann das Fördervolumen V der Hydropumpe Pmp berechnet werden:

$$V_{Pmp} = \frac{(V_{Mot1} * \frac{i_1}{i_2} + V_{Mot2}) * n_{Mot2}}{n_{Pmp}}$$

$$(5.8)$$

Aus der Gleichung 5.5 bis 5.8 folgt:

$$P_{Ver, ges} = f(n_{Pmp}, n_{Mot1}, n_{Mot2}, \Delta p, Rng) \qquad (5.9)$$

Zwischen den Hydromotoren Mot1, Mot2 und den Rädern 4 herrschen nur feste Übersetzungsverhältnisse ($n_{Mot1} \sim n_{Mot2} \sim v$) genau wie zwischen der Hydropumpe Pmp und dem Verbrennungsmotor Die ($n_{Pmp} \sim n_{Die}$). Der Druck p stellt sich in Abhängigkeit des gewünschten Moments M ein, welches wiederum anhand der Fahrpedalstellung und der Fahrgeschwindigkeit v der mobilen Maschine über ein Kennfeld definiert wird. Damit folgt schlussendlich der Zusammenhang in Gleichung 5.10:

$$P_{Ver, ges} = f(n_{Die}, v, Fahrpedal, Rng) \qquad (5.10)$$

Mit der Annahme, dass die ersten drei Parameter aus Sicht der Steuerung des Fahrantriebs Betriebsbedingungen sind und damit zu jedem Zeitpunkt feststehen, ergibt sich aus dem Wunsch nach geringer Verlustleistung ein Optimierungsproblem mit dem Fahrbereich Rng1, Rng2 als variablem Parameter. Die Lösung des Problems ist der optimale Fahrbereich Rng1 oder Rng2.

Figur 3 zeigt ein Schaltdiagramm für den Fahrantrieb aus Figur 1, bei dem erfindungsgemäß die wirkungsgradabhängige Auswahl eines der beiden Fahrbereiche Rng1 oder Rng2 erfolgt.

Entlang der waagerechten Achse sind der erste Fahrbereich Rng1 und der zweite Fahrbereich Rng2 und dazwischen ein Übergangsbereich 8 dargestellt bzw. aufgetragen. Entlang der (in Figur 3 linken) senkrechten Achse sind die Zugkraft $F_N/F_{N\,max}$ und weiterhin der Zustand der ersten Kupplung C1 dargestellt bzw. aufgetragen. Auf der (in Figur 3 rechten) senkrechten Achse sind die Verdrängungsvolumina bzw. Hubvolumina der Hydropumpe Pmp und der beiden Hydromotoren $V_{Mot1}$, $V_{Mot2}$ aufgetragen.

Bezüglich des Hubvolumens bzw. Fördervolumens der Pumpe $V_{Pmp}$ ist zu erkennen, dass dieses ausgehend vom Stillstand der mobilen Maschine zunächst bis zu seinem Maximum ansteigt und dann im ersten Fahrbereich Rng1 maximal eingestellt bleibt. Im Übergangsbereich 8 wird dieses Fördervolumen $V_{Pmp}$ reduziert, um dann im schnelleren zweiten Fahrbereich Rng2 erneut kontinuierlich erhöht zu werden.

Die beiden Schluckvolumina der beiden Motoren $V_{Mot1}$, $V_{Mot2}$ sind im ersten Fahrbereich Rng1 zunächst maximal eingestellt, wobei dann später im ersten Fahrbereich Rng1 das Schluckvolumen des ersten Motors $V_{Mot1}$ reduziert wird. Im Übergangsbereich 8 wird die erste Kupplung C1 geöffnet, so dass der erste Motor Mot1 deaktiviert wird. Dabei bleibt das Schluckvolumen des zweiten Motors $V_{Mot2}$ im Übergangsbereich 8 und auch im gesamten zweiten Fahrbereich Rng2 maximal eingestellt.

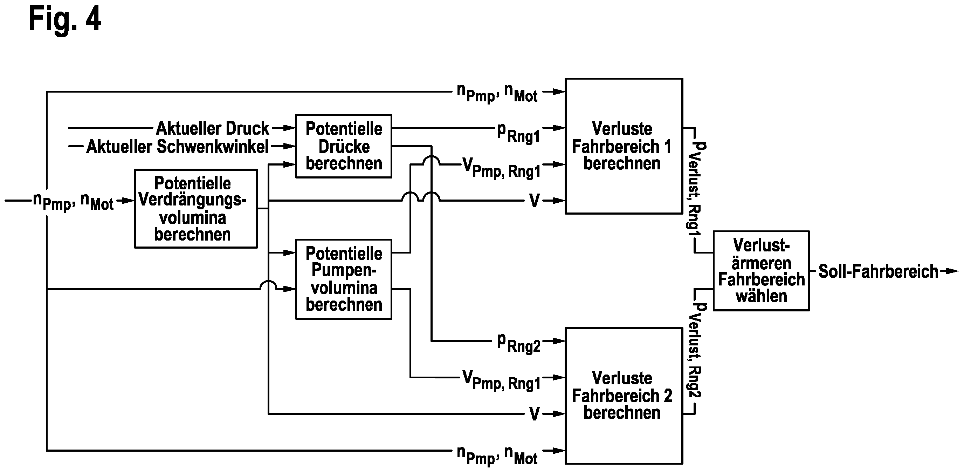

Figur 4 verbildlicht die Ermittlung der Rechengrößen. Mithilfe der aktuellen Betriebsbedingungen werden die Größen zur Verlust- bzw. Wirkungsgradberechnung ermittelt und die auftretenden bzw. potentiell auftretenden Verluste verglichen, mit dem Ziel, den verlustärmeren bzw. wirkungsgradoptimierten Fahrbereich Rng1 oder Rng2 auszugeben.

Die Erfindung kann auf allen mobilen Maschinen, die einen derartigen Fahrantrieb mit zwei Hydromotoren Mot1, Mot2 und ein Summiergetriebe 1 verbaut haben und dieses über das Steuergerät 6 momentenbasiert ansteuern, eingesetzt werden. Für den Einsatz besteht lediglich die Anforderung, dass eine ausreichend genaue mathematische Beschreibung der Verluste an der eingesetzten Hydropumpe Pmp und den eingesetzten Hydromotoren Mot1, Mot2 bekannt ist.

Außerdem lässt sich das Prinzip der Erfindung auch auf andere Getriebetypen mit mehreren diskreten Zuständen übertragen. So kann insbesondere auch bei einem 2+3 Getriebe eine Ermittlung des optimalen Fahrbereichs erfindungsgemäß erfolgen.

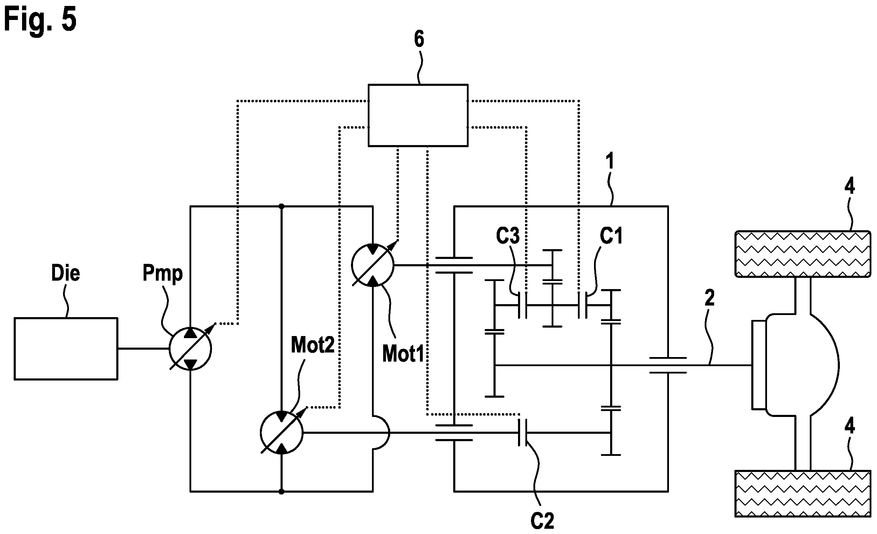

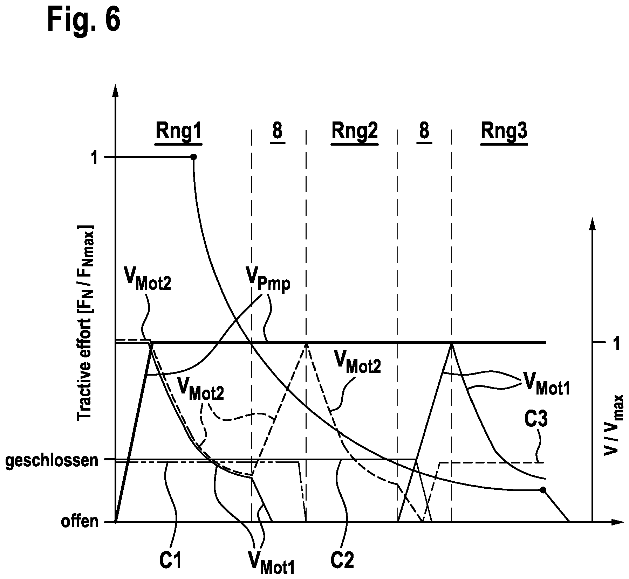

In den Figuren 5 und 6 ist ein derartiges 2+3-Getriebe als zweites Ausführungsbeispiel der Erfindung gezeigt. Dabei hat der Fahrantrieb ergänzend zu dem in Figur 1 gezeigten ersten Ausführungsbeispiel auch für den zweiten Motor Mot2 eine Kupplung C2 und weiterhin für den ersten Motor Mot1 eine weitere Kupplung C3, die alternativ zur ersten Kupplung C1 geschlossen werden kann. Das Steuergerät ist entsprechend auch mit den beiden zusätzlichen Kupplungen C2 und C3 elektrisch verbunden, um diese zu steuern.

Der erste Hydromotor 1 ist also entweder über die erste Kupplung C1 und eine Zahnradstufe mit der Abtriebswelle 2 oder alternativ über die dritte Kupplung C3 und über eine andere Zahnradstufe mit der Abtriebswelle 2 des Summierungsgetriebes 1 drehfest verbunden. Damit ergeben sich die in Figur 6 dargestellten zumindest drei Fahrbereiche Rng1, Rng2 und Rng3.

Im ersten Fahrbereich Rng1 sind die beiden Kupplungen C1 und C2 geschlossen, so dass beide Hydromotoren Mot1, Mot2 ihre Leistung an die Abtriebswelle 2 abgeben. Zur Erhöhung der Drehzahl der Abtriebswelle 2 werden im ersten Fahrbereich Rng1 beide Hydromotoren Mot1, Mot2 in ihrem jeweiligen Schluckvolumen $V_{Mot1}$, $V_{Mot2}$ reduziert.

Im zweiten Fahrbereich Rng2 ist dann die Kupplung C1 offen, so dass nur der zweite Hydromotor Mot2 über seine geschlossene Kupplung C2 Leistung an die Abtriebswelle 2 abgibt. Dabei wird für eine zunehmende Fahrgeschwindigkeit v der mobilen Maschine das Schluckvolumen $V_{Mot2}$ stetig reduziert.

Im schnellsten dritten Fahrbereich Rng3 wird auch die zweite Kupplung C2 geöffnet, so dass der zweite Hydromotor Mot2 abgekoppelt ist. Stattdessen wird der erste Hydromotor Mot1 über die dritte Kupplung C3 und die entsprechende alternative Zahnradstufe mit der Abtriebswelle 2 verbunden, so dass nur der erste Hydromotor Mot1 seine Leistung an die Abtriebswelle abgibt. Dabei wird schließlich zur Erreichung der höchsten Geschwindigkeit v der mobilen Maschine das Schluckvolumen $V_{Mot1}$ reduziert.

Die hier beschriebene Erfindung umfasst eine Schaltstrategie für einen Fahrantrieb mit zwei Hydromotoren und einem Summierungsgetriebe (ZMSG). Der Wechsel zwischen den zumindest zwei möglichen Fahrbereichen bzw. Betriebszuständen erfolgt bei dieser Strategie, sobald der andere Fahrbereich oder einer der anderen Fahrbereiche einen besseren Wirkungsgrad in der Leistungsübertragung als der aktuelle Fahrbereich verspricht. Die Strategie kommt im Zusammenhang mit einer momentenbasierten Steuerung des Fahrantriebs zum Einsatz. Zur Ermittlung des Wirkungsgrads bzw. der Verlustleistungen in den verschiedenen Fahrbereichen werden vorzugsweise zu jedem Zeitpunkt die Größen Fahrgeschwindigkeit, Fahrpedalstellung und Eingangsdrehzahl der Hydropumpe bzw. des Verbrennungsmotors genutzt.

**Patentansprüche**

1.  Fahrantrieb mit einer Hydropumpe (Pmp), von der ein erster Hydromotor (Mot1) und ein dazu parallel geschalteter zweiter Hydromotor (Mot2) versorgbar sind, wobei der erste Hydromotor (Mot1) über eine erste Kupplung (C1) an eine Abtriebswelle (2) eines Summierungsgetriebes (1) koppelbar ist, und wobei der zweite Hydromotor (Mot2) an die Abtriebswelle (2) koppelbar oder (dauerhaft) gekoppelt ist, wobei ein Steuergerät (6) zur Durchführung einer momentenbasierten Steuerung ausgelegt ist, wobei der Fahrantrieb über das Steuergerät (6) mittels der ersten Kupplung (C1) zwischen einem ersten und einem zweiten Fahrbereich (Rng1, Rng2) umschaltbar ist, wobei der Fahrantrieb über das Steuergerät (6) in Abhängigkeit eines vom Steuergerät (6) ermittelten Wirkungsgrades des Fahrantriebs umschaltbar ist, **dadurch gekennzeichnet, dass** bei der Ermittlung des Wirkungsgrades mathematische Beschreibungen für Volumenstrom- und Momentenverluste an der Hydropumpe (Pmp) und an den beiden Hydromotoren (Mot1, Mot2) in Abhängigkeit von zumindest einem jeweiligen Betriebsparameter berücksichtigt werden, wobei die mathematischen Beschreibungen in dem Steuergerät (6) abgelegt sind.

2.  Fahrantrieb nach Anspruch 1, wobei die Ermittlung des Wirkungsgrades mittels eines Kennfeldes erfolgt, das in dem Steuergerät (6) abgelegt ist.

3.  Fahrantrieb nach einem der vorhergehenden Ansprüche, wobei der Wirkungsgrad von einer Drehzahl der Abtriebswelle (2) und/oder einer Drehzahl der Hydropumpe (Pmp) abhängt.

4.  Fahrantrieb nach Anspruch 3, wobei die Hydropumpe (Pmp) und/oder die beiden Hydromotoren (Mot1, Mot2) verstellbar sind, und wobei der Wirkungsgrad von einem Schwenkwinkel ($\alpha$) der Hydropumpe (Pmp) und/oder der beiden Hydromotoren (Mot1, Mot2) abhängt.

5.  Fahrantrieb nach einem der vorhergehenden Ansprüche, wobei der Wirkungsgrad von einem Eingangsanschluss des Steuergerätes (6) abhängt, an das ein Bedienelement einer mobilen Maschine anschließbar oder angeschlossen ist.

6. Fahrantrieb nach einem der vorhergehenden Ansprüche mit einem geschlossenen hydrostatischen Kreis, wobei das Steuergerät (6) zur Durchführung einer Drucksteuerung ausgelegt ist.

7. Fahrantrieb nach einem der vorhergehenden Ansprüche, wobei der zweite Hydromotor (Mot2) permanent an die Abtriebswelle (2) gekoppelt ist.

8. Fahrantrieb nach einem der Ansprüche 1 bis 6, wobei der zweite Hydromotor (Mot2) über eine zweite Kupplung (C2) an die Abtriebswelle (2) koppelbar ist, und wobei der erste Hydromotor (Mot1) über eine dritte Kupplung (C3) an die Abtriebswelle (2) koppelbar ist, wodurch sich ein dritter Fahrbereich (Rng3) ergibt, **dadurch gekennzeichnet, dass** der Fahrantrieb über das Steuergerät (6) in Abhängigkeit des Wirkungsgrades zwischen den drei Fahrbereichen (Rng 1, Rng2, Rng3) umschaltbar ist.


**Claims**

1. Traction drive having a hydraulic pump (Pmp), from which a first hydraulic motor (Mot1) and a second hydraulic motor (Mot2) connected in parallel thereto can be supplied, wherein the first hydraulic motor (Mot1) can be coupled via a first clutch (C1) to an output shaft (2) of a compounding gearbox (1), and wherein the second hydraulic motor (Mot2) can be coupled or is (permanently) coupled to the output shaft (2), wherein a control device (6) is designed to carry out torque-based control, wherein the traction drive can be shifted via the control device (6) between a first and a second traction range (Rng1, Rng2) by means of the first clutch (C1), wherein the traction drive can be shifted via the control device (6) on the basis of an efficiency of the traction drive determined by the control device (6), **characterized in that** when determining the efficiency, mathematical descriptions for volume flow and torque losses at the hydraulic pump (Pmp) and at the two hydraulic motors (Motl, Mot2) are taken into account as a function of at least one respective operating parameter, wherein the mathematical descriptions are stored in the control device (6).

2. Traction drive according to Claim 1, wherein the determination of the efficiency is carried out by means of a characteristic map which is stored in the control device (6).

3. Traction drive according to one of the preceding claims, wherein the efficiency depends on a rotational speed of the output shaft (2) and/or a rotational speed of the hydraulic pump (Pmp).

4. Traction drive according to Claim 3, wherein the hydraulic pump (Pmp) and/or the two hydraulic motors (Motl, Mot2) are adjustable, and wherein the efficiency depends on a swivel angle ($\alpha$) of the hydraulic pump (Pmp) and/or the of two hydraulic motors (Motl, Mot2).

5. Traction drive according to one of the preceding claims, wherein the efficiency depends on an input connection of the control device (6) to which an operating element of a mobile machine is or can be connected.

6. Traction drive according to one of the preceding claims, having a closed hydrostatic circuit, wherein the control device (6) is designed to carry out pressure control.

7. Traction drive according to one of the preceding claims, wherein the second hydraulic motor (Mot2) is permanently coupled to the output shaft (2).

8. Traction drive according to one of Claims 1 to 6, wherein the second hydraulic motor (Mot2) can be coupled to the output shaft (2) via a second clutch (C2), and wherein the first hydraulic motor (Mot1) can be coupled to the output shaft (2) via a third clutch (C3), which results in a third traction range (Rng3), **characterized in that** the traction drive can be shifted by the control device (6) between the three traction ranges (Rng1, Rng2, Rng3) as a function of the efficiency.

**Revendications**

**1.** Système d'entraînement, comprenant une pompe hydraulique (Pmp) qui permet d'alimenter un premier moteur hydraulique (Mot1) et un deuxième moteur hydraulique (Mot2) connecté en parallèle à celui-ci, dans lequel le premier moteur hydraulique (Mot1) peut être accouplé à un arbre entraîné (2) d'un mécanisme de sommation (1) par l'intermédiaire d'un premier embrayage (C1), et dans lequel le deuxième moteur hydraulique (Mot2) peut être accouplé ou est accouplé (de manière permanente) à l'arbre entraîné (2), dans lequel un appareil de commande (6) est conçu pour effectuer une commande basée sur le couple, dans lequel le système d'entraînement peut être commuté par l'intermédiaire de l'appareil de commande au moyen du premier embrayage (C1) entre une première et une deuxième plage de vitesses (Rng1, Rng2), dans lequel le système d'entraînement peut être commuté par l'intermédiaire de l'appareil de commande (6) en fonction d'un rendement du système d'entraînement, déterminé par l'appareil de commande (6),
**caractérisé en ce que** lors de la détermination du rendement, des descriptions mathématiques pour des pertes de débit volumique et de couple au niveau de la pompe hydraulique (Pmp) et des deux moteurs hydrauliques (Mot1, Mot2) sont prises en compte en fonction d'au moins un paramètre de fonctionnement respectif, les descriptions mathématiques étant stockées sur l'appareil de commande (6).

**2.** Système d'entraînement selon la revendication 1, dans lequel la détermination du rendement est effectuée au moyen d'un diagramme caractéristique qui est stocké sur l'appareil de commande (6).

**3.** Système d'entraînement selon l'une quelconque des revendications précédentes, dans lequel le rendement dépend d'une vitesse de rotation de l'arbre entraîné (2) et/ou d'une vitesse de rotation de la pompe hydraulique (Pmp).

**4.** Système d'entraînement selon la revendication 3, dans lequel la pompe hydraulique (Pmp) et/ou les deux moteurs hydrauliques (Mot1, Mot2) sont réglables, et dans lequel le rendement dépend d'un angle de pivotement ($\alpha$) de la pompe hydraulique (Pmp) et/ou des deux moteurs hydrauliques (Mot1, Mot2).

**5.** Système d'entraînement selon l'une quelconque des revendications précédentes, dans lequel le rendement dépend d'une borne d'entrée de l'appareil de commande (6) à laquelle un élément de commande d'une machine mobile peut être ou est connecté.

**6.** Système d'entraînement selon l'une quelconque des revendications précédentes, comprenant un circuit hydrostatique fermé, dans lequel l'appareil de commande (6) est conçu pour effectuer une régulation de pression.

**7.** Système d'entraînement selon l'une quelconque des revendications précédentes, dans lequel le deuxième moteur hydraulique (Mot2) est accouplé de manière permanente à l'arbre entraîné (2).

**8.** Système d'entraînement selon l'une quelconque des revendications 1 à 6, dans lequel le deuxième moteur hydraulique (Mot2) peut être accouplé à l'arbre entraîné (2) par l'intermédiaire d'un deuxième embrayage (C2), et dans lequel le premier moteur hydraulique (Mot1) peut être couplé à l'arbre entraîné (2) par l'intermédiaire d'un troisième embrayage (C3) de sorte qu'il en résulte une troisième plage de vitesses (Rng3),
**caractérisé en ce que** le système d'entraînement peut être commuté entre les trois plages de vitesses (Rng1, Rng2, Rng3) par l'intermédiaire de l'appareil de commande (6) en fonction du rendement.

**Fig. 1**

# Fig. 2

# Fig. 3

**Fig. 4**

Fig. 5

# Fig. 6

**IN DER BESCHREIBUNG AUFGEFÜHRTE DOKUMENTE**

**In der Beschreibung aufgeführte Patentdokumente**

- EP 2187027 A1